# EUROPEAN PATENT SPECIFICATION

(11) **EP 3 395 518 B1**
(45) Date of publication and mention of the grant of the patent: **26.02.2020**
(21) Application number: 16879105.1
(22) Date of filing: 15.07.2016
(51) Int. Cl.: B27C 5/02, B27C 5/06, B27C 5/10, B27C 9/04, B23Q 9/00, B25H 1/08, B25H 1/02, B25H 1/14

(54) **WOODWORKING WORK TABLE**
HOLZBEARBEITUNGSARBEITSTISCH
TABLE DE TRAVAIL DE BOIS

(30) Priority: 24.12.2015 KR 20150186404
(43) Date of publication of application: 31.10.2018
(60) Divisional application: 19199996.0
(73) Proprietor: Lee, Hyun-Jin, Changwon-si, Gyeongsangnam-do 51383 (KR)
(72) Inventor: Lee, Hyun-Jin, Changwon-si, Gyeongsangnam-do 51383 (KR)
(74) Representative: Gulde & Partner
(86) International application number: PCT/KR2016/007747
(87) International publication number: WO 2017/111237

(56) References cited:
- WO-A1-2015/142064
- JP-A- H06 278 107
- JP-A- H10 225 905
- JP-A- H11 342 501
- JP-B2- 5 725 868
- KR-A- 20120 061 706
- KR-A- 20140 013 281
- KR-A- 20140 013 281
- KR-B1- 101 274 642
- US-A- 2 402 324
- US-A- 3 581 622
- US-A- 4 098 170
- US-A- 5 653 273
- US-A- 5 865 228

## Description

### Technical Field

The present invention relates to a woodworking work table according to the preamble of claim 1. Such a work table is disclosed by US 5 653 273.

### Background Art

As generally known in the art, a woodworking machine is a machine that fabricates wood pieces in accordance with types and forms, and for example, there are a router, a boring machine, and a deburring machine.

A cutter such as a table saw is used to cut raw wood pieces, a router is used to perform partial machining, layering, rounding, and molding of wood pieces, a boring machine is used to form various shapes of holes in wood pieces, and a deburring machine is use to grind the surfaces of wood pieces.

These various woodworking machines of the related art are separate apparatuses for woodworking, so it is required to install several woodworking machines for necessary woodworking operations and then perform the woodworking operations in order to perform various woodworking operations.

To solve this problem, woodworking devices having several woodworking functions have been developed, but the manufacturing costs are increased due to complicated configuration. Further, the devices are complicated to use, so it is difficult to perform woodworking operations easily and smoothly.

### Documents of Related Art

### (Patent Documents)

1. Korean Patent No. 10-1176871 (registered on 2012.08.20) : An auto wood engraving
2. Korean Utility Model No. 20-0373063 (registered on 2005.01.05): Router for wood processing
3. Korean Utility Model No. 20-0392421 (registered on 2005.08.02) : Apparatus for making groove in log

### Disclosure

### Technical Problem

The present invention is to provide a woodworking work table that has multiple functions and can easily and smoothly perform various woodworking operations through easy use because applying woodworking functions of various woodworking machines including a cutter, a router, a boring machine, and a beveler.

The present invention provides a woodworking work table that can smoothly and easily perform various woodworking operations by easily feeding or firmly fixing wood pieces to be fabricated.

Further, the present invention provides a woodworking work table that can smoothly and easily perform woodworking operations using various woodworking jigs for planning, chiseling, shaping, milling, molding, cutting, dovetailing, forming of a dowel, and copying.

Further, the present invention provides a woodworking work table that can perform various woodworking operations such as planning, chiseling, shaping, milling, molding, cutting, dovetailing, forming of a dowel, and copying, when using a cutter and a router that can be disposed over a woodworking work table to be movable in the X-axial direction, Y-axial direction, and Z-axial direction.

Furthermore, the present invention provides a woodworking work table that can perform various woodworking operations such as planning, chiseling, shaping, milling, molding, cutting, dovetailing, forming of a dowel, and copying, by fabricating wood pieces while moving a cutter and a router in the X-axial, Y-axial, or Z-axial direction with various woodworking jigs for planning, chiseling, shaping, milling, molding, cutting, dovetailing, forming of a dowel, and copying put on a woodworking work table.

### Technical Solution

According to the present invention there is provided a woodworking work table according to claim 1.

### Advantageous Effects

According to the present invention, it is possible to have multiple functions and easily and smoothly perform various woodworking operations through easy use because applying woodworking functions of various woodworking machines including a cutter, a router, a boring machine, and a beveler.

Therefore, according to the present invention, it is possible to smoothly and easily perform various woodworking operations by easily feeding or firmly fixing wood pieces to be fabricated.

Further, according to the present invention, since woodworking jigs for various woodworking functions can be coupled by a plurality of jig-coupling grooves on a fixed plate and a moving plate, it is possible to smoothly easily perform woodworking operations using various woodworking jigs for planning, chiseling, shaping, milling, molding, cutting, dovetailing, forming of a dowel, and copying.

Further, it is possible to perform various woodworking operations such as planning, chiseling, shaping, milling, molding, cutting, dovetailing, forming of a dowel, and copying, using a cutter and a router that is disposed over a woodworking work table to be movable in the X-axial direction, Y-axial direction, and Z-axial direction.

Furthermore, it is possible to perform various woodworking operations such as planning, chiseling, shaping, milling, molding, cutting, dovetailing, forming of a dowel, and copying, by fabricating wood pieces while moving a cutter and a router in the X-axial, Y-axial, or Z-axial direction with various woodworking jigs for planning, chiseling, shaping, milling, molding, cutting, dovetailing, forming of a dowel, and copying put on a woodworking work table.

### Description of Drawings

FIGS. 1 to 9 are views showing examples of a woodworking work table according to an embodiment of the invention.
FIGS. 10a to 10e are views showing an example of a woodworking jig that is used in the multipurpose woodworking table according to another embodiment of the present invention.

### Best Mode

The advantages and features of the present invention, and methods of achieving them will be clear by referring to the exemplary embodiments that will be described hereafter in detail with reference to the accompanying drawings. However, the present invention is not limited to the exemplary embodiments described hereafter and may be implemented in various ways, and the exemplary embodiments are provided to complete the description of the present invention and let those skilled in the art completely know the scope of the present invention and the present invention is defined by claims. Like reference numerals indicate like components throughout the specification.

In the following description of the present invention, detailed descriptions of well-known functions or configurations relating to the present invention will not be provided so as not to obscure the description of the present invention with unnecessary details. Further, the terminologies described below are terminologies determined in consideration of the functions in the present invention and may be construed in different ways by the intention of users and operators. Therefore, the definitions thereof should be construed based on the contents throughout the specification.

Hereinafter, embodiments of the present invention are described in detail with reference to the accompanying drawings.

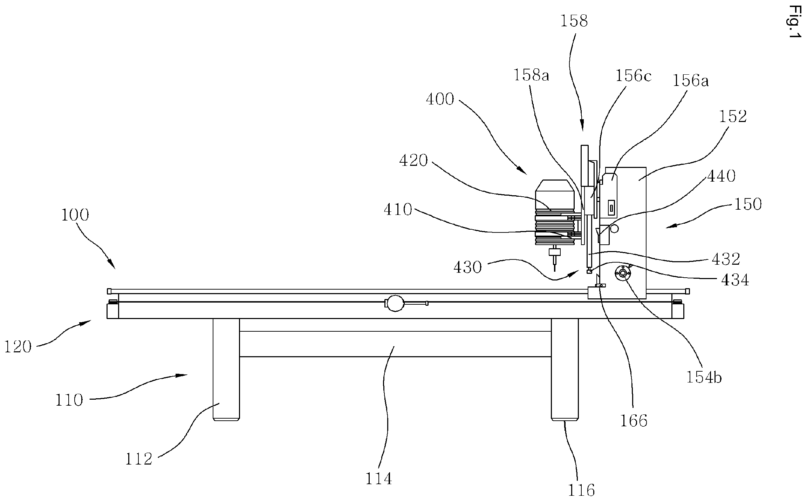

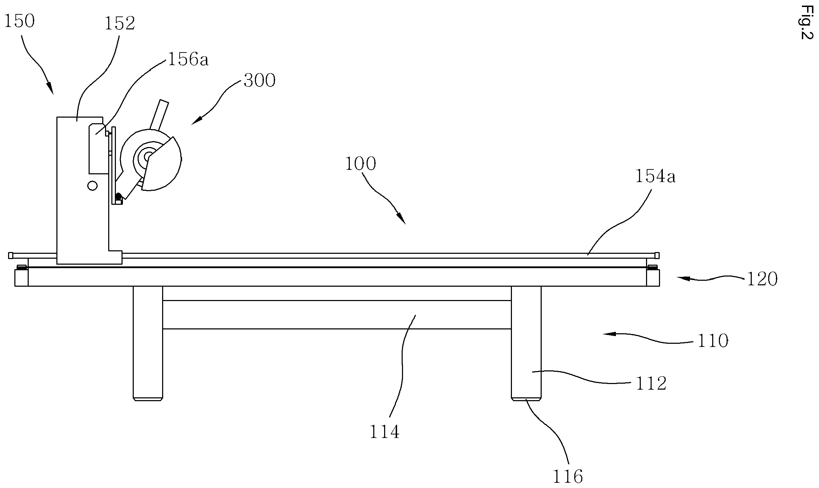

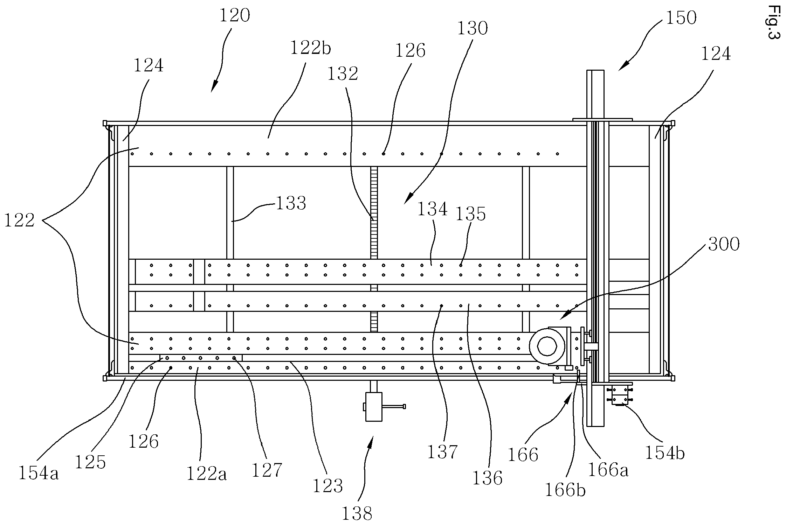

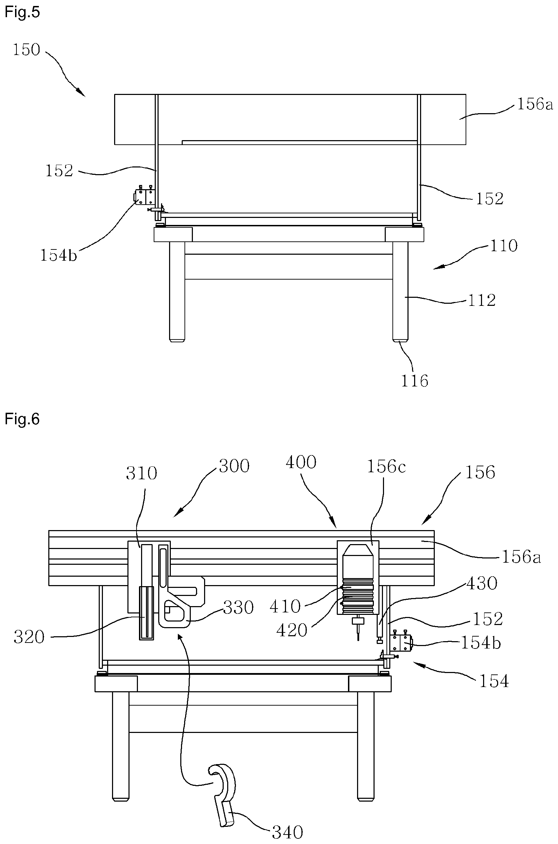

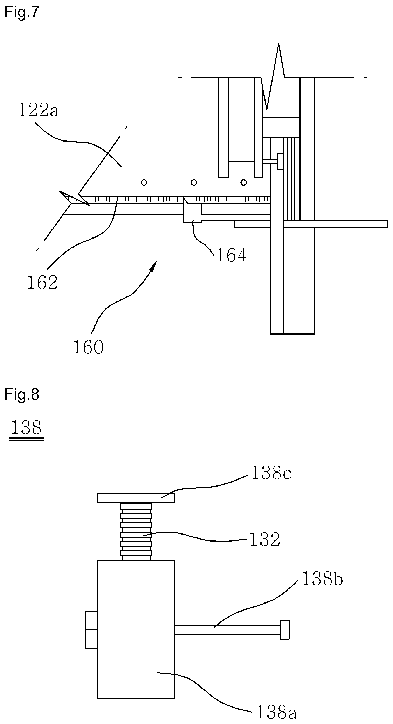

FIGS. 1 to 9 are views showing examples of a woodworking work table according to an embodiment of the present invention. In embodiments of the present invention, it is assumed that an X-axial direction is the left-right direction of a woodworking work table 100, a Y-axial direction is the front-rear direction of the woodworking work table 100, and a Z-axial direction of the up-down direction of the woodworking work table 100.

Referring to FIGS. 1 to 9, a woodworking work table 100, which is a table for woodworking, may include a support post 110, a base frame member 120, a vise member 130, a slider 140, a feeding device 150, and a dimension guide 160.

The support post 110, which is installed at a predetermined height (e.g., around the waist of a person) for easy woodworking on the woodworking work table 100 and supports the components of the woodworking work table 100, may include vertical posts 112, horizontal posts 114, and height adjusters 116.

The vertical posts 112 are made of circular or polygonal wood pieces and four vertical posts are provided to support the components of the woodworking work table 100. The horizontal posts 114 are horizontally coupled and fixed to the vertical posts 112 to assist the vertical ports 112 to support the components. The height adjusters 116 are coupled by bolting etc. and are rotated forward or backward to be able to move up or down the woodworking work table 100 by about 15-30mm.

The height adjusters 116 are disposed on the bottoms of the vertical posts 112, so horizontality of the woodworking work table 100 can be adjusted regardless of the slope of the floor by adjusting the heights of the vertical posts 112 on the basis of a level.

As described above, a plurality of storage holes is formed to keep a plurality of end mills that are coupled to a woodworking machine and can perform ramping, side cutting, pocketing, and helical milling etc., so it is possible to not only easily keep a plurality of end mills, but easily replace and mount the end mills for various woodwork operations.

The base frame member 120, which is a framework supported by the support post 110, may include a front/rear base frame 122, a left/ right base frame 124, first jig-coupling grooves 126, and a through-hole (not shown).

The front/rear base frame 122 and the left/right base frame 124 form a rectangular framework for the woodworking table 110 and the through-hole is formed through the inner side and the outer side of a front base frame 122a of the front and rear base frames 122, so a moving screw 132 of vise member 130 is disposed through the through-hole.

The front/rear base frame 122 includes a front base frame 122a and a rear base frame 122b and is horizontally supported by the vertical supports 112 of the support post 110. A ball bearing may be disposed at the front base frame 122a to prevent forward/rearward movement by rotation of the moving screw 132 and the first jig-coupling grooves 126 in which a woodworking jig for fabricating wood pieces may be formed at the top and the inner sides.

At least one first jig-coupling groove 126 may be arranged with predetermined intervals (e.g., 50mm, 100mm, etc.) in the front-rear direction on the top and the inner sides of the front base frame 122 and at least one first jig-coupling groove 126 may be arranged with predetermined intervals (e.g., 50mm, 100mm, etc.) in the left-right direction. Obviously, the first jig-coupling grooves 126 may be arranged with different intervals (e.g., 50mm, 100mm, etc.) in the front-rear direction or the left-right direction.

The vise member 130, which is coupled to the base frame member 120 to fix a wood to be fabricated, may include the moving screw 132, a moving vise 134, a free vise 136, and a vise handle 138.

In the moving screw 132, a first end is rotatably coupled to the rear base frame 122b of the front/rear base frame 122 of the base frame member 120 and a second end passes through a through-hole 128 formed at the front base frame 122a, and the moving screw 132 can be rotated by the vise handle 138 to be described below.

At least one moving screw 132 may be disposed at the center of an X-axis in the front-rear direction and one or more circular assistant moving bars 133 are spaced from the moving screw, so a wood piece can be stably moved and fixed by the vise member 130.

The moving vise 134 is moved forward or rearward (forward or backward) by rotation of the moving screw 132 and may be engaged with threads on the outer side of the moving screw 132.

The free vise 136 can be freely moved forward or rearward by forward/rearward movement of the moving vise 134 by rotation of the moving screw 132. A ball bearing may be disposed on the free vise 136 not to move forward/rearward due to rotation of the moving screw 132.

A second jig-coupling groove 135 in which a woodworking jig for fabricating wood pieces is coupled may be formed on the top and the sides of the moving vise 134 and a third jig-coupling groove 137 in which a woodworking jig for fabricating wood pieces is coupled may be formed on the top and the sides of the free vise 136.

One or more second jig-coupling groove 135 and one or more third jig-coupling grooves 137 may be arranged with regular intervals in the front-rear direction on the tops and sides and one or more second and third jig-coupling grooves may be arranged with regular intervals in the left-right direction. Obviously, the second jig-coupling grooves 135 and the third jig-coupling grooves 137 may each be arranged with different intervals in the front-rear direction or the left-right direction, if necessary.

The vise handle 138, which is provided to rotate the moving screw 132, may include a handle block 138a fixed to the second end of the moving screw 132, a handle 138b laterally disposed through the handle block 138a and being able to rotate the vise handle 138, and a ball bearing 138c disposed at the portion passing through the front base frame 122a for smooth rotation of the moving screw 132.

The handle 138b has a bar shape exposed to the outside through the handle block 138a and has locking steps at both ends not to separate from the handle block 138a, so it can be protruded to any side to rotate the vise handle 138.

In an embodiment of the present invention described above, although one moving screw 132 and one vise handle 138 are disposed at the center and at least one assistant moving bars 133 are provided, two moving screws 132 and two vise handles 138 may be provided at the position of the assistant moving bar 133 and the moving screws 132 may be linked by a change or a gear so that one of the moving screws 132 is rotated, the other moving screw 132 can also be rotated.

Accordingly, since two moving screws 132 are rotated in the same way, the moving vise 134 and the free vise 136 are moved in the same way, so it is possible to stably fix a wood piece to be fabricated by applying the same force in a Y-axial direction (e.g., forward) of the woodworking work table 100.

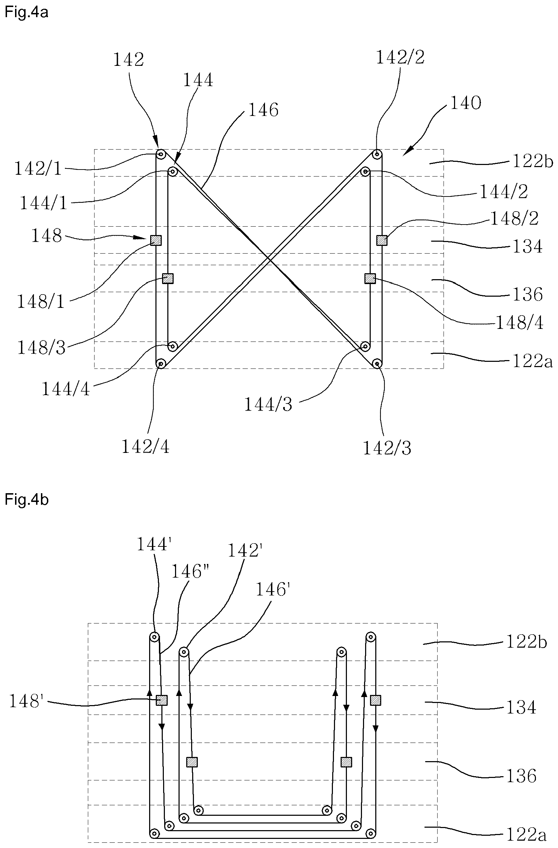

The slider 140 is disposed under the base frame member 120 and the vise member 130 to slide the vise member 130 in the front-rear direction (that is, in the Y-axial direction), and, as shown in FIG. 4a, may include a plurality of outer rollers 142 and a plurality of inner rollers 144 disposed under the front/rear base frame 122 of the base frame member 120, connecting wires 146 disposed on the outer rollers 142 and the inner rollers 144, and a plurality of holders 148 disposed under the moving vise 134 and the free vise 136 of the vise member 130 and fixing the connecting wires 146.

For example, the outer rollers 142 include, clockwise from the left upper portion, a first outer roller, a second roller, a third roller, and a fourth outer roller. The inner rollers 144 include, clockwise from the left upper portion, a first inner roller, a second inner roller, a third inner roller, and a fourth inner roller. The holders 148 include, on the connecting wire 146 extending from the inner roller 144, a first holder and a second holder from the left side under the moving vise 134 and a third holder and a fourth holder from the left side under the free vise 136. In the connecting wire 146 extending in this way, the connecting wire 146 extending from the first outer roller of the outer rollers 142 may be wound around the third outer roller positioned diagonally, fixed to the moving vise 134 by the second holder, and then extended to the second outer roller positioned straight.

The connecting wire 146 wound around the second outer roller may extend to the fourth inner roller, which is positioned diagonally, of the inner rollers 144, the connecting wire 146 wound around the fourth inner roller may be fixed to the free vise 136 by the third holder and extended to the first inner roller, and the connecting wire 146 wound around the first inner roller may be extend to the third inner roller positioned diagonally.

Further, the connecting wire 146 wound around the third inner roller may be fixed to the free vise 136 by the fourth holder and then extended to the second inner roller, the connecting wire 146 wound around the second inner roller may extend to the fourth outer roller positioned diagonally, and the connecting wire 146 wound around the fourth outer roller may be fixed to the moving vise 134 by the first holder and then extended to the first outer roller positioned straight and connected to the initial connecting wire 146. Accordingly, the moving vise 134 and the free vise 136 of the vise member 130 can be smoothly slid with respect to the front/rear base frame 122 of the base frame member 120.

The sliding device 140 having the structure described above can easily slide with a simple configuration, but there is high possibility that when various woodworking operations are performed on the woodworking work table 100, the woodworking operations may be interfered from under the table. Accordingly, in order to solve this problem, the sliding device 140, as shown in FIG. 4b, may include a plurality of inner rollers 142', a plurality of outer rollers 144', an inner connecting wire 146', an outer connecting wire 146", and a plurality of holders 148'. Similar to the description referring to FIG. 4a, the moving vise 134 and the free vise 136 can be moved in the same direction by sliding inward and outward in the directions of arrows.

When the sliding device 140 is configured in this structure, wood pieces can be fabricated without interference from under the woodworking work table 100 when wood pieces are fabricated on the table.

The feeding device 150, which moves a woodworking machine (e.g., a cutter and a router) mounted over the base frame member 120 in X-axial, Y-axial, and Z-axial directions, may include base plates 152, an X-axial feeder 154, a Y-axial feeder 156, and a Z-axial feeder 158.

The base plates 152 are rectangular plates vertically erected and disposed at front and rear sides to be moved in the X-axial direction (i.e., in the left-right direction) by the X-axial feeder 154, and may have the Y-axial feeder 156 and the Z-axial feeder 158.

The X-axial feeder 154, which moves the base plates 152 in the X-axial direction (i.e., in the left-right direction) may include X-axial rails 154a disposed in the left-right directions on the front/rear base frame 122 of the base frame member 120, X-axial rail grooves (not shown) formed in the left-right direction on the top of the X-axial rails 154a, and a ball bearing-typed fixed block 154b disposed on the side of the lower portion of at least one of the base plates 152 to function as a handle for moving the base plates 152 in the X-axial direction (i.e., in the left-right direction).

Grooves corresponding to the X-axial rail grooves are formed at the joints of the base plates 152, so even if a small force is applied to the fixed block 154b, the base plates 152 combined with the X-axial feeder 154 can be smoothly moved in the X-axial direction.

The Y-axial feeder 156 is mounted on the base plates 152 to be movable in the Y-axial direction (i.e., in the front-rear direction) to move in the Y-axial direction and may include a Y-axial base block 156a coupled to the upper ends of the base plates 152, an Y-axial rail 156b formed on the top of a protrusive coupling step on the inner side of the Y-axial base block 156a, and a Y-axial feeder block 156c fitted in the Y-axial rail 156b to move in the Y-axial direction (i.e., in the front-rear direction).

The Y-axial feeder 156 may have a switch 157 for operating a woodworking machine (e.g., a router) may be disposed on the Y-axial feeder 156, a Y-axial scale, a Y-axial indicator, and a Y-axial holder, so it can be firmly and stably moved and fixed at work positions.

The Z-axial feeder 158 is coupled to the Y-axial feeder 156 to be movable in the Z-axial direction (i.e., in the up-down direction) to move a mounted woodworking machine in the Z-axial direction may include a support plate 158a coupled to the Y-axial feeder block 156 of the Y-axial feeder 156 and a Z-axial feeder module (not shown) coupled to the support plate 158a to move a woodworking machine (e.g., a router) in the Z-axial direction.

The Z-axial feeder 158 has a Z-axial scale, a Z-axial indicator, and a Z-axial holder, so it is possible to adjust the Z-axial position of a woodworking machine and fix the woodworking machine at the position.

The Z-axial feeder module can be moved by hydraulic pressure, pneumatic pressure, a screw, or a rail, and this mechanism is well known in the art, so it is not described in detail.

The dimension guide 160 is disposed on the feeding device 150 to guide a woodworking dimension in the X-axial direction (i.e., in the left-right direction) and may include scales 162 marked longitudinally (i.e., in the left-right direction) on the X-axial rails 154a, indicators 164 disposed on the base plates 152 and indicating the scales 162 to fit to a woodworking dimension, and stoppers 166 maintaining the indicators 164 at an adjusted position using a woodworking jig.

The scale 162 can have various units, if necessary, such as centimeter, millimeter, and inch, and the indicator 164 can be stretched a predetermined distance longitudinally inward from an end of the base plate 152, depending on the position to indicate and the position of a woodworking machine.

The stopper 166 includes a stopper holder 166a disposed on the front base plate of the base plates 152 of the feeding device 150 and a stopper member 166b rotatably coupled to the stopper holder 166a and rotating about the X-axis, so it can allow the feeding device 150 to move within a woodworking area in the X-axial direction (i.e., in the left-right direction), using the stopper member 166b.

Therefore, according to the present invention, it is possible to smoothly and easily perform various woodworking operations by easily feeding or firmly fixing wood pieces to be fabricated, by moving forward or rearward at least one moving plate coupled to a moving screw between fixing plates fixed to the front and rear ends of a base frame.

Further, according to the present invention, since woodworking jigs for various woodworking functions are coupled by a plurality of jig-coupling grooves on a fixed plate and a moving plate, it is possible to smoothly and easily perform woodworking operations using various woodworking jigs for planning, chiseling, shaping, milling, molding, cutting, dovetailing, forming of a dowel, and copying.

Next, a woodworking device that includes a cutter, and a router etc. mounted on a woodworking work table having the configuration described above to be movable in X-axial, Y-axial, and Z-axial directions and can smoothly and easily perform various woodworking operations such as cutting, planning, chiseling, shaping, milling, molding, cutting, dovetailing, forming of a dowel, and copying, using various woodworking jigs combined with the woodworking work table is described.

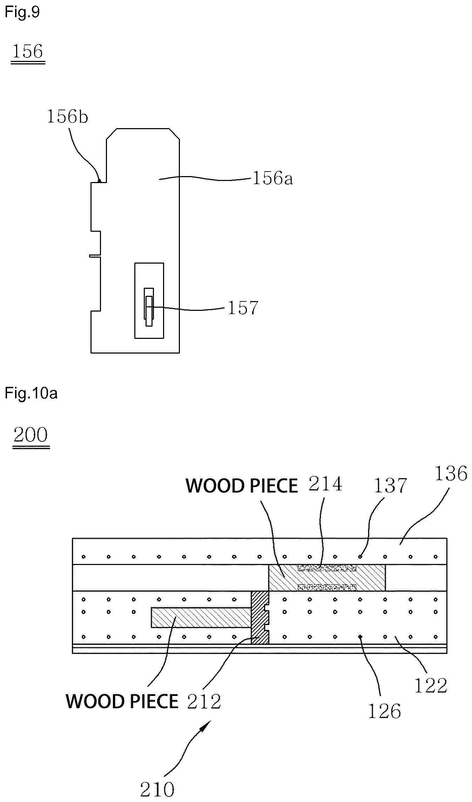

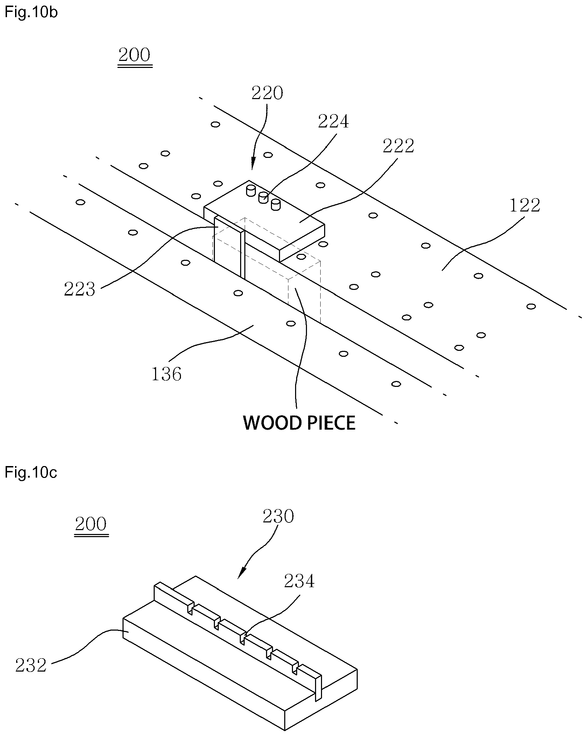

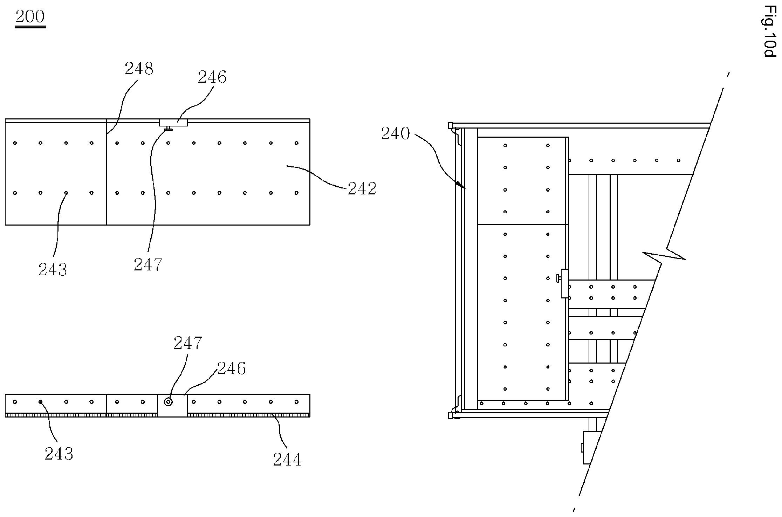

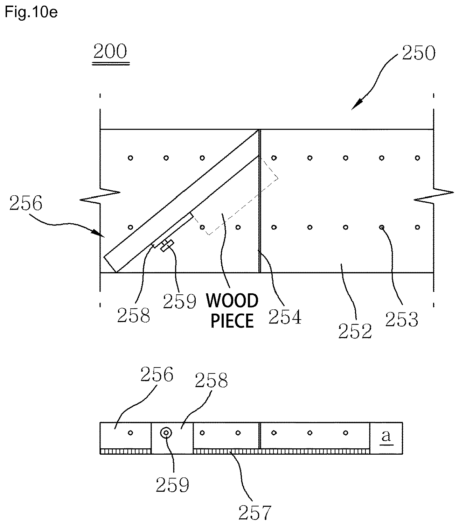

FIGS. 1 to 9 are views showing a woodworking work table according to an embodiment of the present invention and a multipurpose woodworking table according to another embodiment including the woodworking work table and FIGS. 10a and 10e are views showing woodworking jigs that are used for the multipurpose woodworking table according to a preferred embodiment of the present invention.

Referring to FIGS. 1 to 9 and FIGS. 10a to 10e, a multipurpose woodworking table according to preferred embodiment of the present invention includes a woodworking work table 100, a woodworking jig 200, a cutter 300, and a router 400.

The woodworking work table 100, which is a table for woodworking, may include a support post 110, a base frame member 120, a vise member 130, a slider 140, a feeding device 150, a dimension guide 160, and a jig management member 170. As described above, the woodworking work table has the same configuration as the previous embodiment of the present invention and is also the same in operation, so they are not described in detail here.

Furthermore, other components of the multipurpose woodworking table are given the same reference numerals as those in the previous embodiment of the present invention in the following description.

A plurality of woodworking jigs 200 is provided for a plurality of woodworking operations (e.g., planning, chiseling, shaping, milling, molding, cutting, dovetailing, forming of a dowel, and copying), is combined with the woodworking work table 100 to guide a plurality of woodworking operations, and may include a wood piece support jig 210, a shaping guide jig 220, a stopper jig 230, a cutting jig 240, and a oblique-cutting jig 250. The jigs 200 may be independently or simultaneously used.

The wood piece supporting jig 210 is disposed on the woodworking work table 100 and supports a wood piece to be fabricated, horizontally or under the wood piece, including a horizontal support jig 212 and the lower support jig 214. The horizontal support jig 212 is coupled to the top of the front/rear base frame 122, the moving frame 134, and the free vise 136 at a fabrication position to be able to horizontally support a wood piece to be fabricated, and can stably support a wood piece to be fabricated on a side thereof.

The horizontal support jig 212 has various sizes, depending on the use, can be used for planning and cutting etc., and is coupled in the left-right direction (i.e., the X-axial direction) or the front-rear direction (i.e., the Y-axial direction) to the first jig-coupling grooves 126 on the front/rear base frame 122 of the base frame 120. Planning can be performed with an end of a wood piece to be fabricated supported on a side of the horizontal support jig 212.

The lower support jig 214 is coupled to the first jig-coupling grooves 126 formed on the inner side of the front base frame 122a of the front/rear base frame 122 and the third jig-coupling groove 137 formed on the inner side of the free vise 136, and a wood piece to be fabricated can be mounted on the top of the lower support jig.

The lower support jig 214 has different lengths, depending on the use, and is combined with the front/rear base frame 122 and the free vise 136 at a higher position than the front/rear base frame and the vise member. Accordingly, a wood piece to be fabricated can be firmly fixed by forward movement of the moving vise 134 and the free vise 136.

The horizontal support jig 212 and the lower support jig 214 can be individually or simultaneously used, if necessary.

The shaping guide jig 220, which is a guide jig for making shapes in a plurality of woodworking operations, includes a shaping guide body 222 combined with the front-rear base frame 122 and guide portions 224 guiding the router 400 when the router is moved such that wood pieces can be fabricated in various shapes.

For example, in woodworking for forming circular grooves and circular joints corresponding to the circular groove, the rectangular guide body 222 of the shaping guide jig 200 is coupled to the front/rear base frame 122 and position support plate 223 vertically formed on the rear side of the shaping guide body 222 supports a wood piece to be fabricated at a fabrication position, and the guide portions 224 formed in circular and polygonal post shapes on the top of the shaping guide body 222 can guide the router 400 that is moved to form circular grooves.

Accordingly, in the woodworking for forming circular grooves and circular joints corresponding to the circular grooves, a first wood piece is supported by the position support plate 223 of the shaping guide jig 220 and fixed by the vise member 130 and circular grooves are formed on the first wood piece by adjusting the X-axial position and the Z-axial position after adjusting the Y-axial position of the router 400. Then, the first wood piece is separated, a second wood piece is fixed at the same position, and then circular joints are formed by moving the router 400 along the guide portions 224 while adjusting the X-axial position and the Y-axial position after adjusting the Z-axial position.

The position support plate 223 is coupled to the upper end of the rear side of the shaping guide body 222 to be movable to a fabrication position of a wood piece in the left-right direction (i.e., in the X-axial direction) together with the guide jig body, and it is vertically disposed to be able to vertically support a wood piece.

The stopper jig 230 maintains movement of the router on the woodworking work table 100 in the X-axial direction (i.e., the left-right direction of the woodworking work table 100) at intervals for woodworking within the range of the woodworking, and includes a stopper jig block 232 that is coupled to the top of the woodworking work table 100 at the position of the dimension guide 160 and interval grooves 234 formed on the top of the stopper jig block 232 at the intervals for the woodworking . Accordingly, it is possible to movement of the stopper 166 of the dimension guide 160 within the intervals of the woodworking to be performed and it is possible to easily adjust the fabrication intervals on a wood piece in accordance with the intervals of the interval grooves 232.

The base plate 152 of the feeding device 150 with a woodworking machine (e.g., the cutter 300 and the router 400) mounted thereon can be prevented from moving out of the woodworking intervals in the X-axial direction, so woodworking can be performed in accordance with predetermined intervals.

For example, in woodworking for forming rectangular joints, it is possible to easily form rectangular joints by repeating a process of forming a first joint end: by fixing a wood piece to be fabricated between the front base frame 122a and the free vise 136; by turning and inserting the stopper member 166b of the stopper 166 into the first groove of the interval grooves 232 formed with regular intervals; by adjusting the Z-axial position (i.e., the up-down position) of the router 400; and then by moving the router 400 to be described below in the front-rear direction of the woodworking work table 100 and a process of forming a second joint groove by inserting and fixing the stopper member 166b in the second groove of the interval grooves 232 and then moving the router 400 in the front-rear direction of the woodworking work table 100.

The cutting jig 240, which is a jig that is coupled to repeatedly cut wood pieces to be fabricated in the same shape, may include a cutting jig body 242 formed by combining a horizontal plate and a vertical plate and disposed on the woodworking work table 100 in the front-rear direction (e.g., the Y-axial direction), a cutting scale 244 marked on the inner side of the vertical plate, a cutting wood piece support portion 246 disposed on the vertical plate to support wood pieces to be fabricated at a work position, and a cutting groove 248 formed at a cutting position on the cutting jig body 242.

The cutting jig body 242 may have a locking step to be firmly coupled between the front base frame 122a and the rear base frame 122b of the front/rear base frame 122 and may have assistant jig-coupling grooves 243 formed with regular intervals or different intervals on the top and a side thereof to couple various assistant jigs.

The cutting wood piece support portion 246 is disposed to cover the top of the vertical plate of the cutting jig body 242 and firmly fixed by a fixing member 247 such as a bolt, whereby it can firmly support wood pieces to be cut at the same position.

The cutting grooves 248 are formed on the entire horizontal plate and vertical plate of the cutting jig body 242, so when a wood piece is cut by the cutter 300 to be described below, the lower end of a circular saw is moved into the horizontal plate and the wood piece can be stably cut.

A plurality of jig-coupling grooves is formed on the top of the cutting jig body 242 of the cutting jig 240, so various jigs for assisting woodworking can be coupled and mounted.

The woodworking jig 200 may further include the oblique-cutting jig 250. The oblique-cutting jig 250 may include: a jig plate 252 that is a horizontal plate and mounted on the woodworking work table 100 in the front-rear direction (i.e., Y-axial direction); an oblique-cutting groove 254 that is formed at a cutting position on the jig plate 252; an oblique guide block 256 that is obliquely combined with the jig plate 252 in accordance with a fabrication angle from the oblique-cutting groove 254; an oblique scale 257 marked on the inner side of the oblique guide block 256; and an oblique-cutting support portion 258 mounted on the oblique guide block 256 to support a wood piece to be fabricated at a work position.

A plurality of block-coupling grooves 253 to which the oblique guide block 256 may be formed on the top of the jig plate 252. The block coupling grooves 253 may be formed in various ways horizontally or vertically with regular intervals or different intervals, so it is possible to guide wood pieces at various fabrication angles by obliquely combining the oblique guide block 256.

Further, an end (a) of the oblique guide block 256 may be formed at the same angles as a fabrication angle to cut wood pieces without being interfered with the oblique-cutting groove 254 and the angle can be adjusted in accordance with lengthwise and transverse intervals of the block-coupling grooves 253, so wood pieces can be cut at necessary angles.

The cutting wood piece support portion 258 is disposed on the inner side of the jig plate 252 and firmly fixed by a support fixing member 259 such as a bolt, whereby it can firmly support wood pieces to be cut at the same position.

The cutter 300, which is a woodworking machine that is mounted over the woodworking work table 100 and performs a plurality of woodworking operations (e.g., shaping and cutting), using a circular saw, may include a cutter support 310 combined downward to a Y-axial base block 156a of the Y-axial feeder 156, a circular saw module 320 fixed to the cutter support 310, and a circular saw handle 330 for operating the circular saw module 320.

A plate fixing member 311 is disposed through the cutter support 310 like a bolt, so it is possible to move and fix the cutter at desired work positions in the front-rear direction of the woodworking work table 100 along a side of the Y-axial base block 156a and to move down the circular saw module 320 to fabricate wood pieces. Further, the cutter may have a protective cover for protecting a user.

The cutter 300 may further includes an operation state holder 340 that is combined with the circular saw handle 300, depending on the operate state of the circular saw. The operation state holder 340 may have a concave hook corresponding to the circular handle 330.

Woodworking by the cutter 300 is described. In shaping of a medium density fiberboard (MDF), an MDF wood piece is put on the woodworking work table 100, the circular saw module 320 is maintained in the operation state by mounting the operation state holder 340 on the circular saw handle 330, and then the cutter 300 is moved from an end to the other end in the left-right direction (i.e., X-axial direction) of the woodworking work table 100 by pushing the fixed block 154c of the X-axial feeder 154 of the feeding device, whereby it is possible to easily shape the MDF wood piece.

Furthermore, in order to shape a raw wood piece, the horizontal support jig 212 that is long in the left-right direction (X-axial direction) is mounted at both front and rear end on the woodworking work table 100, the raw wood piece is put to be supported on a side of the horizontal support jig 212 and fixed by the vise member 130, whereby it is possible to easily shape the raw material by operating the cutter 300.

In this shaping of raw wood pieces, when one shaping operation is finished, the raw wood piece is moved by the wood piece shaping width and then fixed at the position by the vise member 130, and then the shaping process described above is repeated, whereby it is possible to easily repetitively produce wood products with the same width.

Furthermore, in woodworking such as shaping and cutting using the cutter 300, various fixing clamps can be used, depending on the thickness, width, and length of wood pieces. Accordingly, it is possible to stably fix wood pieces in woodworking and manufacture wood products having various thicknesses, widths, and lengths.

The router 400 is a woodworking machine for performing several woodworking operations (e.g., milling, dovetailing, forming of a dowel, and copying) and may include a router support 410 horizontally mounted by the support plate 158a of the Z-axial feeder 158 of the feeding device 150 to support the router 400, a router module 420 disposed on the router support 410 to perform woodworking, a router guide 430 disposed on a side of the front of the Z-axial feeder 158 to be guided to the shaping guide jig 220 of the woodworking jig 200, and a router operator 440 operating the router module 420.

It is possible to selectively mount various-dimensional end mills for ramping, side cutting, pocketing, and helical milling etc. of a plurality end mills on the router module 420 and then perform corresponding woodworking operations (e.g., milling, molding, dovetailing, forming of a dowel, and copying).

The router guide 430 may include a guide body 432 vertically coupled to the support plate 158a of the Z-axial feeder 158 and extending downward and a circular guide pin 434 coupled to the bottom of the guide body 432 to be able to move up/down and rotate about the Z-axis, so the guide pin 434 can be guided along the guide portions 224 of the shaping guide jig 220.

For example, woodworking that uses the router 400 described above is described. In milling of a wood piece, it is possible to fix a wood piece to be fabricated using the base frame member 120 and the vise member 130 on the woodworking work table 100. It is possible to firmly and stably fix a wood piece to be fabricated by coupling the lower support jig 214 longitudinally (i.e., in the left-right direction) to the first jig-coupling grooves 126 formed on the inner side of the front base frame 122a, by coupling the lower support jig 214 longitudinally (i.e., in the left-right direction) of the third jig-coupling grooves 137 formed on the inner side of the free vise 136, by putting the wood piece to be fabricated on the lower support jig 214, and then moving forward the vise member 130.

Further, it is possible to uniformly mill the top of the wood piece at a desired work position by moving and fixing the router 400 at an Y-axial work position: by adjusting the Y-axial position (i.e., in the front-rear direction of the woodworking work table 100), using the Y-axial feeder 156; by moving and fixing the router 400 at a Z-axial work position by adjusting the Z-axial position (i.e., in the up-down direction of the woodworking work table 100) using the Z-axial feeder 158; and by moving the router 400 from a first end to a second end in the left-right direction of the woodworking work table 100 (i.e., in the X-axial direction) using the fixing block 154c of the X-axial feeder 154.

Next, it is possible to uniformly mill the top of the wood piece by moving and fixing the router 400 at the next Y-axial work position by adjusting the Y-axial position by a predetermined distance (i.e., in the front-rear direction of the woodworking work table 100) using the Y-axial feeder 156, moving the router 400 from the first end to the second end in the left-right direction of the woodworking work table 100 (i.e., in the X-axial direction), through the fixed block 154c of the X-axial feeder 154, and then repeating this process.

It is possible to form various grooves (e.g., a U-shape, a V-shape, and a rectangular shape with an open top) by replacing and mounting end mills on the router in the similar way to the above description. Furthermore, it is possible to perform molding for forming a continuous rounded ends using a plurality of end mills. Furthermore, it is possible to perform various woodworking operations (e.g., milling, dovetailing, forming of a dowel, and copying) in this way.

Therefore, according to the present invention, it is possible to have multiple functions and easily and smoothly perform various woodworking operations through easy use because applying woodworking functions of various woodworking machines including a cutter, a router, a boring machine, and a beveler.

Furthermore, it is possible to perform various woodworking operations such as planning, chiseling, shaping, milling, molding, cutting, dovetailing, forming of a dowel, and copying, using a cutter and a router that is disposed over a woodworking work table to be movable in the X-axial direction, Y-axial direction, and Z-axial direction.

Furthermore, it is possible to perform various woodworking operations such as planning, chiseling, shaping, milling, molding, cutting, dovetailing, forming of a dowel, and copying, by fabricating wood pieces while moving a cutter and a router in the X-axial, Y-axial, or Z-axial direction with various woodworking jigs for planning, chiseling, shaping, milling, molding, cutting, dovetailing, forming of a dowel, and copying put on a woodworking work table.

**<Description of the Reference Numerals in the Drawings>**

| | |
|---|---|
| 100 : woodworking work table | 110 : support post |
| 120 : base frame member | 130 : vise member |
| 140 : slider | 150 : feeding device |
| 160 : dimension guide | |
| 200 : woodworking jig | |
| 210 : wood piece support jig | |
| 220 : shaping guide jig | 230 : stopper jig |
| 240 : cutting jig | 250 : oblique-cutting jig |
| 300 : router | 310 : router support |
| 320 : circular saw module | |
| 330 : circular saw handle | |
| 400 : router | 410 : router support |
| 420 : router module | 430 : router guide |
| 440 : router operator | |

## Claims

1. A woodworking work table (10) comprising:
a support post (110) having a predetermined height;
a base frame member (120) supported by the support post;
a vise member (130) combined with the base frame member (120) to fix a wood piece to be fabricated;
a slider (140) disposed under the base frame member (120) and the vise member to slide the vise member (130) in a front-rear direction; and
a feeding device (150) configured to move a woodworking machine mountable over the base frame member (120) in X-axial and Z-axial directions,
wherein the base frame member (120) has a plurality of first jig-coupling grooves (126) combinable with at least one of a plurality of woodworking jigs, and
the vise member (130) has a plurality of second jig-coupling grooves (135) and a plurality of third jig-coupling grooves (137) combinable with at least one of a plurality of woodworking jigs,
the vise member (130) is configured to fix the wood piece by moving a moving vise (134) and a free vise (136) horizontally disposed inside the base frame member (120) through a rotation of a moving screw (132) and the slider (140),
**characterized in that**
the feeding device is additionally configured to move a woodworking machine mountable over the base frame member in the Y-axial direction, and
the second jig-coupling grooves (135) are formed on a top and a side of the moving vise (134), and
the third jig-coupling grooves (137) are formed on a top and a side of the free vise.

2. The woodworking work table of claim 1, further comprising a dimension guide (160) disposed on the feeding device to guide a woodworking dimension in the X-axial direction.

3. The woodworking work table of claim 2, wherein the support post (110) has a plurality of storage holes to keep a plurality of end mills mounted on a woodworking machine mountable over the base frame member (120).

4. The woodworking work table of any one of claims 1 to 3, wherein the base frame member (120) includes a front and rear base frame (122) and a left and right base frame (124) that form a rectangular framework of the woodworking work table, and the first jig-coupling grooves are formed on a top and an inner side of the front and rear base frame.

5. The woodworking work table of claim 4, wherein the slider (140) includes a plurality of outer rollers (142) and a plurality of inner rollers (144) disposed under the front and rear base frame (122) of the base frame member (120),
connecting wires disposed on the outer rollers and the inner rollers, and
a plurality of holders disposed under the moving vise and the free vise of the vise member (130) and fixing the connecting wires.

6. The woodworking work table of any one of claims 1 to 3, wherein the feeding device (150) includes:
base plates (152) being rectangular plates vertically erected and disposed at front and rear sides;
an X-axial feeder (154) moving the base plates in the X-axial direction;
a Y-axial feeder (156) mounted on the base plates to be movable in the Y-axial direction and to be moved in the Y-axial direction;
a Z-axial feeder (158) coupled to the Y-axial feeder to be movable in the Z-axial direction and configured to move a woodworking machine mountable over the base frame member (120) in the Z-axial direction.

## Patentansprüche

1. Holzbearbeitungsarbeitstisch (10) umfassend:
einen Stützpfosten (110) mit einer vorbestimmten Höhe;
ein durch den Stützpfosten gestütztes Grundrahmenelement (120);
ein mit dem Grundrahmenelement (120) kombiniertes Schraubstockelement (130) zum Fixieren eines zu bearbeitenden Holzstücks;
einen unter dem Grundrahmenelement (120) und dem Schraubstockelement angeordneten Schieber (140) zum Verschieben des Schraubstockelements (130) in einer Vorwärts-/Rückwärtsrichtung; und
eine Zuführvorrichtung (150), die dazu ausgestaltet ist, eine über dem Grundrahmenelement (120) montierbare Holzbearbeitungsmaschine in X-Achsen- und Z-Achsen-Richtung zu bewegen,
wobei das Grundrahmenelement (120) eine Mehrzahl erster Spannvorrichtungskopplungsnuten (126) aufweist, die mit zumindest einer aus einer Mehrzahl von Holzbearbeitungsspannvorrichtungen kombinierbar sind, und
das Schraubstockelement (130) eine Mehrzahl zweiter Spannvorrichtungskopplungsnuten (135) und eine Mehrzahl dritter Spannvorrichtungskopplungsnuten (137) aufweist, die mit zumindest einer aus einer Mehrzahl von Holzbearbeitungsspannvorrichtungen kombinierbar sind,
das Schraubstockelement (130) dazu ausgestaltet ist, das Holzstück durch Bewegen eines sich bewegenden Schraubstocks (134) und eines freien Schraubstocks (136), die horizontal innerhalb des Grundrahmenelements (120) angeordnet sind, durch eine Drehung einer sich bewegenden Schraube (132) und des Schiebers (140) zu fixieren,
**dadurch gekennzeichnet, dass**
die Zuführvorrichtung außerdem dazu ausgestaltet ist, eine über dem Grundrahmenelement montierbare Holzbearbeitungsmaschine in der Y-Achsen-Richtung zu bewegen, und
die zweiten Spannvorrichtungskopplungsnuten (135) auf einer Oberseite und einer Seite des sich bewegenden Schraubstocks (134) ausgebildet sind und
die dritten Spannvorrichtungskopplungsnuten (137) auf einer Oberseite und einer Seite des freien Schraubstocks ausgebildet sind.

2. Holzbearbeitungsarbeitstisch nach Anspruch 1, ferner umfassend eine an der Zuführvorrichtung angeordnete Abmessungsführung (160) zum Führen einer Holzbearbeitungsabmessung in der X-Achsen-Richtung.

3. Holzbearbeitungsarbeitstisch nach Anspruch 2, wobei der Stützpfosten (110) eine Mehrzahl von Aufbewahrungslöchern zum Aufbewahren einer Mehrzahl von Schaftfräsern, die an einer über dem Grundrahmenelement (120) montierbaren Holzbearbeitungsmaschine montiert sind, aufweist.

4. Holzbearbeitungsarbeitstisch nach einem der Ansprüche 1 bis 3, wobei das Grundrahmenelement (120) einen vorderen und hinteren Grundrahmen (122) und einen linken und rechten Grundrahmen (124), die ein rechteckiges Gestell des Holzbearbeitungsarbeitstischs ausbilden, umfasst und die ersten Spannvorrichtungskopplungsnuten auf einer Oberseite und einer Innenseite des vorderen und hinteren Grundrahmens ausgebildet sind.

5. Holzbearbeitungsarbeitstisch nach Anspruch 4, wobei der Schieber (140) Folgendes umfasst: eine Mehrzahl äußerer Rollen (142) und eine Mehrzahl innerer Rollen (144), die unter dem vorderen und hinteren Grundrahmen (122) des Grundrahmenelements (120) angeordnet sind,
Verbindungsdrähte, die an den äußeren Rollen und den inneren Rollen angeordnet sind, und
eine Mehrzahl von Haltern, die unter dem sich bewegenden Schraubstock und dem freien Schraubstock des Schraubstockelements (130) angeordnet sind und die Verbindungsdrähte fixieren.

6. Holzbearbeitungsarbeitstisch nach einem der Ansprüche 1 bis 3, wobei die Zuführvorrichtung (150) Folgendes umfasst:
Grundplatten (152), bei denen es sich um vertikal aufgerichtete rechteckige Platten handelt, die an der Vorder- und der Rückseite angeordnet sind;
einen X-Achsen-Zuführer (154), der die Grundplatten in der X-Achsen-Richtung bewegt;
einen Y-Achsen-Zuführer (156), der an den Grundplatten montiert ist, um in der Y-Achsen-Richtung bewegbar zu sein und in der Y-Achsen-Richtung bewegt zu werden;
einen Z-Achsen-Zuführer (158), der mit dem Y-Achsen-Zuführer gekoppelt ist, um in der Z-Achsen-Richtung bewegbar zu sein, und der dazu ausgestaltet ist, eine über dem Grundrahmenelement (120) montierbare Holzbearbeitungsmaschine in der Z-Achsen-Richtung zu bewegen.

## Revendications

1. Table de travail pour le travail du bois (10), comprenant :
un montant de support (110) présentant une hauteur prédéterminée ;
un élément de cadre de base (120) supporté par le montant de support ;
un élément d'étau (130) combiné avec l'élément de cadre de base (120) afin de fixer une pièce de bois à fabriquer ;
un coulisseau (140) disposé sous l'élément de cadre de base (120) et l'élément d'étau afin de faire coulisser l'élément d'étau (130) dans une direction avant-arrière ; et
un dispositif d'alimentation (150) configuré pour déplacer une machine à travailler le bois, qui peut être montée au-dessus de l'élément de cadre de base (120), dans les directions de l'axe X et de l'axe Z,
dans laquelle l'élément de cadre de base (120) présente une pluralité de premières rainures d'accouplement de gabarit (126) qui peuvent être combinées avec au moins un gabarit parmi une pluralité de gabarits de travail du bois, et
l'élément d'étau (130) présente une pluralité de deuxièmes rainures d'accouplement de gabarit (135) et une pluralité de troisièmes rainures d'accouplement de gabarit (137) qui peuvent être combinées avec au moins un gabarit parmi une pluralité de gabarits de travail du bois,
l'élément d'étau (130) est configuré pour fixer la pièce de bois en déplaçant un étau de déplacement (134) et un étau libre (136) disposés horizontalement à l'intérieur de l'élément de cadre de base (120) par le biais d'une rotation d'une vis de déplacement (132) et du coulisseau (140),
**caractérisée en ce que**
le dispositif d'alimentation est de plus configuré pour déplacer une machine à travailler le bois, qui peut être montée sur l'élément de cadre de base, dans la direction de l'axe Y, et
les deuxièmes rainures d'accouplement de gabarit (135) sont formées sur un dessus et un côté de l'étau de déplacement (134), et
les troisièmes rainures d'accouplement de gabarit (137) sont formées sur un dessus et un côté de l'étau libre.

2. Table de travail pour le travail du bois selon la revendication 1, comprenant en outre un guide de dimensions (160) disposé sur le dispositif d'alimentation afin de guider une dimension de travail du bois dans la direction de l'axe X.

3. Table de travail pour le travail du bois selon la revendication 2, dans laquelle le montant de support (110) présente une pluralité d'orifices de stockage afin de conserver une pluralité de fraises à queue à rainurer montées sur une machine à travailler le bois qui peut être montée sur l'élément de cadre de base (120).

4. Table de travail pour le travail du bois selon l'une des revendications 1 à 3, dans laquelle l'élément de cadre de base (120) comporte un cadre de base avant et arrière (122) et un cadre de base gauche et droite (124) qui forment une structure rectangulaire de la table de travail pour le travail du bois, et les premières rainures d'accouplement de gabarit sont formées sur un dessus et un côté interne du cadre de base avant et arrière.

5. Table de travail pour le travail du bois selon la revendication 4, dans laquelle le coulisseau (140) comporte une pluralité de rouleaux externes (142) et une pluralité de rouleaux internes (144) disposés sous le cadre de base avant et arrière (122) de l'élément de cadre de base (120),
des câbles de liaison disposés sur les rouleaux externes et les rouleaux internes, et une pluralité de supports disposés sous l'étau de déplacement et l'étau libre de l'élément d'étau (130) et fixant les câbles de liaison.

6. Table de travail pour le travail du bois selon l'une des revendications 1 à 3, dans laquelle le dispositif d'alimentation (150) comporte :
des plaques de base (152) qui sont des plaques rectangulaires érigées verticalement et disposées au niveau des côtés avant et arrière ;
un moyen d'alimentation dans l'axe X (154) déplacant les plaques de base dans la direction de l'axe X ;
un moyen d'alimentation dans l'axe Y (156) monté sur les plaques de base afin de pouvoir être déplacé dans la direction de l'axe Y et d'être déplacé dans la direction de l'axe Y;
un moyen d'alimentation dans l'axe Z (158) couplé au moyen d'alimentation dans l'axe Y afin de pouvoir être déplacé dans la direction de l'axe Z et configuré pour déplacer une machine à travailler le bois, qui peut être montée au-dessus de l'élément de cadre de base (120), dans la direction de l'axe Z.
